# EUROPEAN PATENT SPECIFICATION

(11) **EP 3 474 660 B1**
(45) Date of publication and mention of the grant of the patent: **20.05.2020**
(21) Application number: 16820028.5
(22) Date of filing: 26.09.2016
(51) Int. Cl.: A01K 13/00

(54) **HOOF COVER**
HUFSCHUTZ
COUVRE-SABOTS

(30) Priority: 24.06.2016 MY PI2016702339
(43) Date of publication of application: 01.05.2019
(73) Proprietor: Sanctuary Health SDN. BHD., Greentown Avenue 30250 Ipoh Perak (MY)
(72) Inventor: KOH, Yek Joo, 30450 Ipoh, Perak Darul Ridzuan (MY)
(74) Representative: FRKelly
(86) International application number: PCT/MY2016/000067
(87) International publication number: WO 2017/222363

(56) References cited:
- GB-A- 2 519 624
- US-A- 1 036 750
- US-A- 3 386 226
- US-A- 6 122 901

## Description

### Technical Field of Invention

This invention relates generally to a foot cover for hoofed animals such as ruminants and equines.

### Background of the Invention

The present invention provides a hoof cover that is elastic and stretchable over the hoof of animals such as ruminants and equines to securely hold a dressing or treatment pad over the infected area of the hoof. The hoof cover of the present invention is suitable to be used for the treatment of hoof diseases such as digital dermatitis.

To treat the hoof, some users may apply a dressing to the hoof and use plastic films or cloths to bandage the hoof. Some users may also use plastic bags to cover the hoof with a collar or the opening of the bag being tied to leg with additional fastener such as a rope or a Velcro fastener. These methods provide a loose attachment to the leg and may not be ideal due to leg movements of the animals.

The US patent publication no. 2014/0196915 discloses a hoof cover. The cover includes a hoof shoe and a sock joined at a seam. The US patent no. US7818952 discloses a hoof boot comprises an elastic, hoof-enveloping casing. Hoof covers that are formed to be like a shoe or a boot as disclosed in the above documents, are not desirable as these types of hoof covers require a sole that will increase the length of the leg. Further, the construction of the shoe or the boot will require more materials rendering it more expensive to manufacture than the hoof cover of the present invention.

The EP patent no. EP1309255 discloses an elastic hoof cover wherein the cover may be moulded with stretchable compound such as latex and the process of making disposable examination gloves may be adopted.

US6122901 A (SCHULTZ ELAINE [US] ET AL 26 September 2000) discloses a bandage for an animal's foot to cover the bottom of the feet. The bandage includes multiple attachment tabs. The tabs are configured to be bonded to the side of the animal foot.

GB2519624 A (EQUILIBRIUM PRODUCTS LTD [GB] 29 April 2015) discloses an over reach boot for a lower portion of a foreleg of a horse, pony or like animal. The boot comprising a cuff which comprises an outer face formed by continuous sheet of material. The sheet defines a closure flap that is provided with a fastening means.

US1036750 A (TUTTLE CHARLES B [US] 27 August 1912) 1) discloses a boot for horses comprising a single piece of leather or other flexible material to strap the hoof. The resultant structure of the boot is the bell shape. Buckles are provided to secure the bell-boot.

Typically, in the making of latex gloves, different sizes of moulds are used to produce gloves with different sizes. The moulds are dipped into a latex solution and the latex is cured to take the shape and size of the moulds. In the final process, the cured gloves will be stripped from the moulds. This method produces gloves without a seam.

It has been observed that cured latex on a mould that has a hoof shape is difficult to be stripped off due to the shape and oversized section of the hoof.

In view of the above shortcomings, it is an object of the present invention to provide a hoof cover that is elastic and stretchable to securely hold an item such as a dressing or a treatment pad that can be provided without the need of being moulded.

It is another object to provide a method for making a hoof cover that is elastic and stretchable from a sheet of an elastic material without the need of being moulded or undergone the typical moulding process.

### Summary of the Invention

The above mentioned object is achieved with a hoof cover according to claim 1 and a hoof cover according to claim 7. According to the present invention, a hoof cover for hoofed animals such as ruminants and equines comprising an elastically stretchable body with an opening for foot-insertion, an opening for at least partially exposing the hoof and another opening for at least partially exposing the hoof wherein first and second sides of the body are seamed with a cloth or fabric.

The blank in this invention refers to an article with a shape or form that is ready to be used or processed. Preferably, the blank of the present invention is a cut-out of an elastic sheet. Preferably, the elastic sheet is composed of latex or like compound. A die-cutting process will be used to obtain the preferred shape of the blank.

The blank comprises a first wing on one side and a second wing on the other side. The wings extend from a vertical axis of the blank wherein on the axis an upper notch and a lower notch are located. The notch is formed by a curved cut. To form the hoof cover of this invention, the blank are folded about the vertical axis to place the first wing to face the second wing wherein the individual curved cut sections will be folded into half. In this folding position, the first and second sides of the wings are stitched together with a cloth wherein the stitching defines the foot-insertion opening and the opening at the corners of the hoof cover. The stitching of the elastic material to the cloth provides a secure attachment of the cover and prevents the cover from breaking when it is stretched over the hoof or leg of animals.

According to the invention, a cloth is placed between the wings that are facing to each other in the folding position and stitched together to seam or join the respective sides of the hoof cover. In another embodiment, a cloth is placed between the wings that are facing to each other in the folding position and an additional cloth is placed onto the wings and stitched together to cover and join the respective sides of the hoof cover.

### Brief Description of the Drawings

The present invention will be described by the way of example in reference to the accompanying drawings, in which:
Fig. 1 shows a blank of an elastic material for making a hoof cover according to an embodiment of the present invention;
Fig. 2 shows a hoof cover made from the blank shown in Fig. 1; and
Fig. 3 shows a hoof cover shown in Fig. 2 with an additional cloth stitched at its sides.

### Detailed Description of the Invention

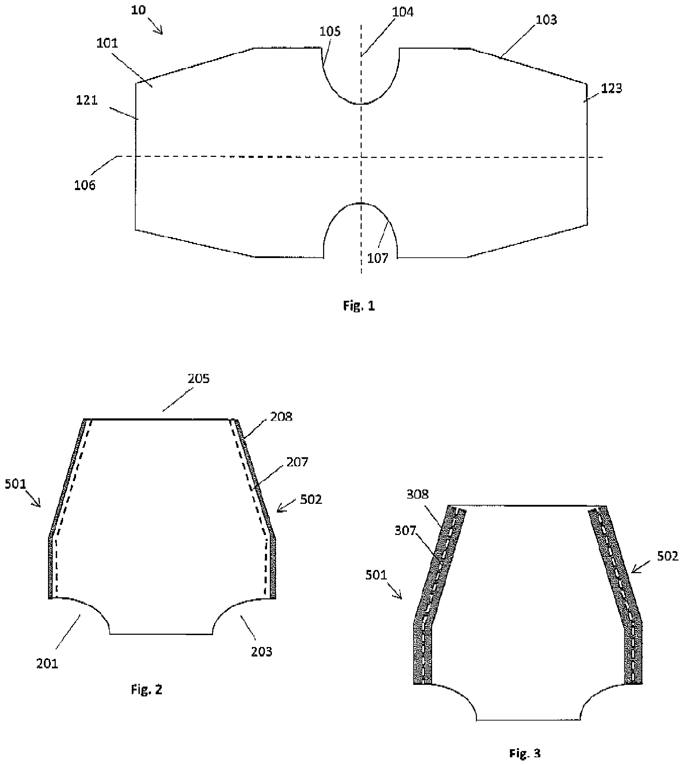

Referring to Fig. 1, an example of blank of an elastic sheet is provided for making a hoof cover according to the present invention. Preferably, the elastic sheet is composed of latex or like compound that will provide the stretchability over the hoof. Preferably, the blank (10) has a wing (101) on one side and another wing (103) on the other side wherein each wing extends from a vertical axis (104) of the blank. On the vertical axis (104), an upper notch (105) with a curved cut is located at one end and a lower notch (107) with a curved cut is located at the other end. The curve cut of the notch is defined by one or more radiuses. The blank in Fig. 1 shows that the outer section of the wing includes a trapezoid that is followed by a rectangular wherein a corner section on one side of the rectangle is being cut away to form the said notches. The trapezoid forms slanting profiles that are connected to the flat profiles of the rectangle. The combination of these profiles defines the first (501) and second (502) sides that are to be stitched or defines the seaming area of the sheet. Depending on the geometrical shape of the wing, the said first and second sides can also have a curved profile for example, from end to end of the wing.

For example, the span of the blank is in the range of 30 cm to 32 cm and the thickness of the sheet is in the range of 0.22 mm to 0.30 mm. The outer vertical side (121, 123) of the first wing and second wing is in the range of 10 cm to 11 cm. The intermediate vertical length of the blank on the vertical axis (104) is preferably in the range of 50 mm to 70 mm. These dimensions may vary in order to provide hoof covers with different sizes.

5 Fig. 2 shows a front view of a hoof cover made from the blank shown in Fig. 1. To form the hoof cover, the blank are folded about the vertical axis (104). In this folding position the wings are facing to each other wherein the individual notches (105,107) will be folded into half. In this folding position, the first side and second side of both wings are stitched together with a cloth (208). Preferably, the cloth is placed between the wings to secure the sheet wherein the stitching (207) on the first (501) and second (502) sides of the wings defines the opening (205) for the insertion of the foot of hoofed animals, the openings (201, 203) for at least partially exposing the hoof.

Fig.3 shows the hoof cover of Fig. 2 having the first (501) and second sides (502) of the wings stitched (307) together with a cloth in between and an additional cloth (308) over the wings.

The process of making the hoof cover according to the present invention begins with compounding raw latex with chemical and colour mixing. Next, the latex compound is dipped and cured to produce a sheet. Then, the sheet is cut into a preferred shape or blank by a die-cutting machine. The blank needs to be washed to remove any powder before it can be stitched together with a cloth to form a complete hoof cover. The stitching parameter includes a thread size of around 0.22 mm with a pitching of preferably 9 stitches per inch (1 inch = 2.54 cm) with a needle size of around 110/18.

## Claims

1. A hoof cover for hoofed animals comprising an elastically stretchable body with a foot-insertion opening (205), an opening (201) for at least partially exposing the hoof and another opening (203) for at least partially exposing the hoof **characterised in that** the body is formed from a blank (10) of an elastic sheet that is seamed with a cloth (208) wherein the blank comprises a wing (101) on one side and another wing on the other side wherein the blank is folded about its vertical axis (104) to place the wings to face each other and the cloth (208) is placed between the wings and stitched together to seam a first side (501) and a second side (502) of the sheet.

2. A hoof cover as claimed in claim 1 wherein the blank is a cut-out of an elastic sheet that is composed of latex.

3. A hoof cover as claimed in claim 1 wherein the opening (201) for at least partially exposing the hoof is formed by a notch (105) with a curved cut located at one end on a vertical axis (104) of the blank.

4. A hoof cover as claimed in claim 1 wherein the other opening (203) for at least partially exposing the hoof is formed by a notch (107) with a curved cut located at the other end on a vertical axis (104) of the blank.

5. A hoof cover as claimed in claim 1 wherein the blank comprises a span in the range of 30 cm to 32 cm, an outer vertical side in the range of 10 cm to 11 cm, and an intermediate vertical length on vertical axis (104) in the range of 50 mm to 70 mm.

6. A hoof cover as claimed in claim 1 wherein the blank has a thickness in the range of 0.22 mm to 0.30 mm.

7. A hoof cover for hoofed animals comprising an elastically stretchable body with a foot-insertion opening (205), an opening (201) for at least partially exposing the hoof and another opening (203) for at least partially exposing the hoof **characterised in that** the body is formed from a blank (10) of an elastic sheet that is seamed with a cloth (208) wherein the blank comprises a wing (101) on one side and another wing on the other side wherein the sheet is folded about its vertical axis (104) to place the wings to face to each other and the cloth (208) is placed between the wings, and another cloth (308) is placed over the wings and stitched together to seam a first side (501) and a second side (502) of sheet.

8. A hoof cover as claimed in claim 7 wherein the blank comprises a span in the range of 30 cm to 32 cm, an outer vertical side in the range of 10 cm to 11 cm, and an intermediate vertical length on vertical axis (104) in the range of 50 mm to 70 mm.

9. A hoof cover as claimed in claim 7 wherein the blank has a thickness in the range of 0.22 mm to 0.30 mm.

## Patentansprüche

1. Hufschutz für Huftiere, der einen elastisch dehnbaren Körper mit einer Fußeinführöffnung (205), einer Öffnung (201) zum zumindest teilweisen Freilegen des Hufs und einer weiteren Öffnung (203) zum zumindest teilweisen Freilegen des Hufs umfasst, **dadurch gekennzeichnet, dass** der Körper aus einem Zuschnitt (10) einer elastischen Schicht gebildet ist, die mit einem Stoff (208) gesäumt ist, wobei der Zuschnitt einen Flügel (101) auf einer Seite und einen anderen Flügel auf der anderen Seite umfasst, wobei der Zuschnitt an seiner vertikalen Achse (104) gefaltet ist, um die Flügel so zu platzieren, dass sie sich gegenüber liegen und wobei der Stoff (208) zwischen den Flügeln platziert und zusammengenäht ist, um eine erste Seite (501) und eine zweite Seite (502) der Schicht zu säumen.

2. Hufschutz nach Anspruch 1, wobei der Zuschnitt ein Ausschnitt einer elastischen Schicht ist, die aus Latex besteht.

3. Hufschutz nach Anspruch 1, wobei die Öffnung (201) zum zumindest teilweisen Freilegen der Hufe durch eine Kerbe (105) mit einem Bogenschnitt gebildet ist, der sich an einem Ende einer vertikalen Achse (104) des Zuschnitts befindet.

4. Hufschutz nach Anspruch 1, wobei die weitere Öffnung (203) zum zumindest teilweisen Freilegen des Hufs durch eine Kerbe (107) mit einem Bogenschnitt gebildet ist, der sich an dem anderen Ende einer vertikalen Achse (104) des Zuschnitts befindet.

5. Hufschutz nach Anspruch 1, wobei der Zuschnitt eine Spannweite im Bereich von 30 cm bis 32 cm, eine äußere vertikale Seite im Bereich von 10 cm bis 11 cm und eine mittlere vertikale Länge auf einer vertikalen Achse (104) im Bereich von 50 mm bis 70 mm umfasst.

6. Hufschutz nach Anspruch 1, wobei der Zuschnitt eine Dicke im Bereich von 0,22 mm bis 0,30 mm aufweist.

7. Hufschutz für Huftiere, der einen elastisch dehnbaren Körper mit einer Fußeinführöffnung (205), einer Öffnung (201) zum zumindest teilweisen Freilegen des Hufs und eine weitere Öffnung (203) zum zumindest teilweisen Freilegen des Hufs umfasst, **dadurch gekennzeichnet, dass** der Körper aus einem Zuschnitt (10) einer elastischen Schicht gebildet ist, die mit einem Stoff (208) gesäumt ist, wobei der Zuschnitt einen Flügel (101) auf einer Seite und einen anderen Flügel auf der anderen Seite umfasst, wobei der Zuschnitt an seiner vertikalen Achse (104) gefaltet ist, um die Flügel so zu platzieren, dass sie sich gegenüber liegen und wobei der Stoff (208) zwischen den Flügeln platziert und wobei ein weiterer Stoff (308) über den Flügeln platziert und zusammengenäht ist, um eine erste Seite (501) und eine zweite Seite (502) der Schicht zu säumen.

8. Hufschutz nach Anspruch 7, wobei der Zuschnitt eine Spannweite im Bereich von 30 cm bis 32 cm, eine äußere vertikale Seite im Bereich von 10 cm bis 11 cm und eine mittlere vertikale Länge auf einer vertikalen Achse (104) im Bereich von 50 mm bis 70 mm umfasst.

9. Hufschutz nach Anspruch 7, wobei der Zuschnitt eine Dicke im Bereich von 0,22 mm bis 0,30 mm aufweist.

## Revendications

1. Couvre-sabots pour animaux à sabots comprenant un corps élastiquement extensible avec une ouverture d'insertion de pied (205), une ouverture (201) permettant d'exposer au moins partiellement le sabot et une autre ouverture (203) permettant d'exposer au moins partiellement le sabot, **caractérisé en ce que** le corps est formé à partir d'une ébauche (10) d'une feuille élastique qui est cousue avec un tissu (208) dans lequel l'ébauche comprend une aile (101) sur un côté et une autre aile sur l'autre côté dans lequel l'ébauche est pliée autour de son axe vertical (104) pour placer les ailes face à face et le tissu (208) est placé entre les ailes et celles-ci sont cousues ensemble pour coudre un premier côté (501) et un second côté (502) de la feuille.

2. Couvre-sabots selon la revendication 1, dans lequel l'ébauche est une découpe d'une feuille élastique qui est composée de latex.

3. Couvre-sabots selon la revendication 1, dans lequel l'ouverture (201) permettant d'exposer au moins partiellement le sabot est formée par une encoche (105) avec une découpe incurvée située à une extrémité sur un axe vertical (104) de l'ébauche.

4. Couvre-sabots selon la revendication 1, dans lequel l'autre ouverture (203) permettant d'exposer au moins partiellement le sabot est formée par une encoche (107) avec une découpe incurvée située à l'autre extrémité sur un axe vertical (104) de l'ébauche.

5. Couvre-sabots selon la revendication 1, dans lequel l'ébauche comprend une étendue dans la plage de 30 cm à 32 cm, un côté vertical extérieur dans la plage de 10 cm à 11 cm, et une longueur verticale intermédiaire sur un axe vertical (104) dans la plage de 50 mm à 70 mm.

6. Couvre-sabots selon la revendication 1, dans lequel l'ébauche a une épaisseur dans la plage de 0,22 mm à 0,30 mm.

7. Couvre-sabots pour animaux à sabots comprenant un corps élastiquement extensible avec une ouverture d'insertion de pied (205), une ouverture (201) permettant d'exposer au moins partiellement le sabot et une autre ouverture (203) permettant d'exposer au moins partiellement le sabot, **caractérisé en ce que** le corps est formé à partir d'une ébauche (10) d'une feuille élastique qui est cousue avec un tissu (208) dans lequel l'ébauche comprend une aile (101) sur un côté et une autre aile sur l'autre côté dans lequel la feuille est pliée autour de son axe vertical (104) pour placer les ailes face à face et le tissu (208) est placé entre les ailes, et un autre tissu (308) est placé sur les ailes et celles-ci sont cousues ensemble pour coudre un premier côté (501) et un second côté (502) de feuille.

8. Couvre-sabots selon la revendication 7, dans lequel l'ébauche comprend une étendue dans la plage de 30 cm à 32 cm, un côté vertical extérieur dans la plage de 10 cm à 11 cm, et une longueur verticale intermédiaire sur l'axe vertical (104) dans la plage de 50 mm à 70 mm.

9. Couvre-sabots selon la revendication 7, dans lequel l'ébauche a une épaisseur dans la plage de 0,22 mm à 0,30 mm.
